# EUROPÄISCHE PATENTSCHRIFT

(11) **EP 3 298 981 B1**
(45) Veröffentlichungstag und Bekanntmachung des Hinweises auf die Patenterteilung: **24.07.2019**
(21) Anmeldenummer: 17192506.8
(22) Anmeldetag: 22.09.2017
(51) Int. Cl.: A61C 1/12, B65D 39/08

(54) **HANDSTÜCKKOPF FÜR EIN ZAHNÄRZTLICHES HANDSTÜCK**
HANDPIECE HEAD FOR A DENTAL HANDPIECE
TÊTE POUR UNE PIÈCE À MAIN DENTAIRE

(30) Priorität: 22.09.2016 DE 102016218273
(43) Veröffentlichungstag der Anmeldung: 28.03.2018
(73) Patentinhaber: Sirona Dental Systems GmbH, 64625 Bensheim (DE)
(72) Erfinder: Ertugrul, Metin, 64295 Darmstadt (DE)
(74) Vertreter: Özer, Alpdeniz

(56) Entgegenhaltungen:
- EP-A1- 0 634 148
- EP-A1- 1 627 611
- EP-A1- 1 774 923
- FR-A1- 2 863 862
- JP-A- H10 196 631

## Beschreibung

### Technisches Gebiet

Die Erfindung betrifft einen Handstückkopf umfassend ein Gehäuse und einen Verschlussdeckel, wobei das Gehäuse mit dem Verschlussdeckel mittels einer Schraubverbindung lösbar verbunden ist.

### Stand der Technik

Aus dem Stand der Technik sind mehrere Verschlussdeckel für zahnärztliche Handstücke bekannt, wie zum Beispiel in EP0634148 offenbart.

Das Fixieren des Verschlussdeckels kann beispielsweise durch das Einschrauben mit einem fest definierten Drehmoment erfolgen.

Dies hat jedoch den Nachteil, dass der Verschlussdeckel sich durch Vibrationen wieder lösen kann.

Bei einer weiteren Möglichkeit wird der Verschlussdeckel nach dem Einschrauben mit dem Gehäuse verklebt. Dies hat jedoch den Nachteil, dass die Klebeverbindung sich durch Vibrationen wieder lösen kann.

Bei einer weiteren Möglichkeit ist eine Bohrung vorgesehen, die durch den Verschlussdeckel und das Gehäuse geht, so dass nach dem Einschrauben des Verschlussdeckels die Fixierung dadurch erfolgt, dass eine Schraube in die Bohrung geschraubt wird oder ein Stift in die Bohrung gesteckt wird. Dies hat jedoch den Nachteil, dass die Schraube oder der Stift sich durch Vibrationen wieder lösen können.

Bei einer weiteren Möglichkeit wird an dem Außengewinde des Verschlussdeckels oder an dem Innengewinde des Gehäuses ein Kunststoffkörper angebracht, der beim Einschrauben des Verschlussdeckels ein höheres Drehmoment verursacht.

Dies hat jedoch den Nachteil, dass der Kunststoffkörper durch das wiederholte Einschrauben und durch die Dampfsterilisation seine Formstabilität verlieren kann.

In der EP 1774923 A1 ist ein Verschlussdeckel für ein Gehäuse eines zahnärztlichen Handstücks offenbart, wobei zur Fixierung des Verschlussdeckels ein Federelement verwendet wird, der beim Einschrauben gegen die Innenwand des Gehäuses gedrückt wird und dadurch ein Reibschluss entsteht. Ein Nachteil besteht darin, dass ein Reibschluss eine kraftschlüssige Verbindung ist und sich durch Vibrationen wieder lösen kann.

DE 8309396 U1 offenbart einen Drehverschluss für Flaschen, die mit Flüssigkeit gefüllt sind und unter Gasdruck stehen. Beim Einschrauben des Plastikkörpers mit Griffleiste und Schraubgewinde in den zweiten Plastikkörper mit Innen-Schraubgewinde und Außen-Lamellen wird der konisch ausgebildete Andruckring nach außen gedrückt und damit die Plastikgreifer mit Aussparungen gegen den Flaschenhals gepresst. Beim Aufschrauben des ersten Plastikkörpers werden die Plastikgreifer wieder gelöst und der Drehverschluss kann wieder von der Flasche getrennt werden.

DE 1950532 U offenbart einen Flaschenverschluss für Flaschen, die unter Druck stehen. Der Flaschenverschluss weist eine Hülse auf, in die ein Stopfen mit einem Gewinde eingeschraubt wird, wobei beim Einschrauben des Stopfens eine radiale Spannung gegenüber dem Flaschenhals entsteht und ein Wulstrand am Wulstrand des Flaschenhalses verankert wird. Beim Herausschrauben des Stopfens aus der Hülse hebt sich der Wulstrand über den Wulstrand der Flasche und die Hülle verliert ihre radiale Spannung gegenüber dem Flaschenhals, so dass der gesamte Flaschenverschluss abgenommen werden kann.

JP 2013-052906 A offenbart einen Flaschenverschluss, wobei ein erstes Teil in ein zweites Teil geschraubt wird, um den Flaschenhals abzudichten.

Die Aufgabe der vorliegenden Erfindung besteht daher darin einen Verschlussdeckel für einen zahnärztlichen Handstücckopf für ein zahnärztliches Handstück bereitzustellen, das sich durch Vibrationen des Handstücks nicht vollständig vom Handstückkopf lösen kann.

### Darstellung der Erfindung

Die Erfindung betrifft einen Handstückkopf umfassend ein Gehäuse und einen Verschlussdeckel, wobei das Gehäuse mit dem Verschlussdeckel mittels einer Schraubverbindung lösbar verbunden ist. Der Handstückkopf weist dabei eine Einrastverbindung auf, wobei beim Einschrauben des Verschlussdeckels die Einrastverbindung einrastet.

Ein Vorteil eines solchen Handstückkopfes besteht darin, dass durch das Einrasten zwischen dem Verschlussdeckel und dem Gehäuse ein ungewolltes Lösen des Verschlussdeckels vom Gehäuse durch Vibration des Handstückkopfes verhindert wird.

Ein weiterer Vorteil des Handstückkopfes besteht darin, dass zum Fixieren des Verschlussdeckels kein zusätzliches Bauteil, wie ein Federelement, erforderlich ist. Denn die Vertiefungen und die Erhöhungen sind Bestandteil des Verschlussdeckels oder des Gehäuses.

Der Verschlussdeckel und das Gehäuse können aus einem Kunststoff gefertigt sein.

Der Verschlussdeckel kann in das Gehäuse eingeschraubt werden, wobei der Verschlussdeckel ein Außengewinde und die Innenwand des Gehäuses ein Innengewinde aufweisen kann.

Alternativ dazu kann der Verschlussdeckel auf das Gehäuse aufgeschraubt werden, wobei der Verschlussdeckel ein Innengewinde und das Gehäuse an der Außenfläche ein Außengewinde aufweist.

Zum Einrasten wird also eine Einrastverbindung aus mindestens einer Erhöhung und einer entsprechenden Vertiefung verwendet.

Die mindestens eine Vertiefung kann am Verschlussdeckel oder am Gehäuse angeordnet sein. Die entsprechende Vertiefung ist so angeordnet, dass im eingeschraubten Zustand die Erhöhung in die Vertiefung einrastet.

Die Erhöhung und die entsprechende Vertiefung können beliebig geformt sein. Beispielsweise kann die Erhöhung rechteckig geformt sein oder eine schräge Kante aufweisen. Beim Einschrauben wird also der Verschlussdeckel oder das Gehäuse elastisch verformt bis die Erhöhung in die Vertiefung einrastet und der Verschlussdeckel oder das Gehäuse in den ursprünglichen Zustand vor der elastischen Verformung zurückkehren.

Der Verschlussdeckel weist mindestens eine Vertiefung auf, wobei das Gehäuse entsprechend mindestens eine Erhöhung aufweist, wobei beim Einschrauben des Verschlussdeckels die Erhöhung am Gehäuse in die entsprechende Vertiefung am Verschlussdeckel einrastet. Die Einrastverbindung wird folglich durch die Erhöhung und die Vertiefung gebildet.

Falls der Verschlussdeckel in das Gehäuse eingeschraubt wird, weist eine Außenfläche des Verschlussdeckels mindestens eine Vertiefung auf, wobei eine Innenfläche des Gehäuses mindestens eine Erhöhung aufweist, wobei beim Einschrauben des Verschlussdeckels die Erhöhung am Gehäuse in die entsprechende Vertiefung am Verschlussdeckel einrastet.

Dadurch rastet die Erhöhung am Gehäuse in die Vertiefung am Verschlussdeckel ein.

Falls der Verschlussdeckel auf das Gehäuse aufgeschraubt wird, weist eine Innenfläche des Verschlussdeckels mindestens eine Erhöhung auf, wobei eine Außenfläche des Gehäuses entsprechend mindestens eine Vertiefung aufweist, wobei beim Einschrauben des Verschlussdeckels die Erhöhung am Verschlussdeckel in die entsprechende Vertiefung am Gehäuse einrastet.

Bei dieser alternativen Ausführungsform wird der Verschlussdeckel auf das Gehäuse aufgeschraubt, so dass die Erhöhung am Verschlussdeckel in die entsprechende Vertiefung am Gehäuse einrastet.

Vorteilhafterweise kann die Erhöhung und die entsprechende Vertiefung in einer Schnittdarstellung durch eine Drehachse des Verschlussdeckels und des Gehäuses rechteckig geformt ist.

Dadurch wird eine stabile Einrastverbindung gewährleistet.

Vorteilhafterweise kann die Erhöhung an einer oberen Ecke eine erste Fase und/oder an einer unteren Ecke eine zweite Fase aufweisen.

Durch die Fase an der oberen Ecke der Erhöhung wird die elastische Verformung des Verschlussdeckels oder des Gehäuses erleichtert. Denn durch die schräge Fase wird die Kraft die beim Einschrauben des Verschlussdeckels entsteht in eine größere radiale Kraft zur elastischen Verformung umgewandelt.

Vorteilhafterweise kann die Vertiefung an einer unteren Ecke eine Fase aufweisen.

Durch die Fase an der unteren Ecke der Vertiefung wird das Lösen der Einrastverbindung erleichtert. Denn durch die Fase an der unteren Ecke wird die Kraft beim Aufschrauben des Verschlussdeckels in eine größere radiale Kraft zur elastischen Verformung umgewandelt.

Zwischen der Erhöhung und der Vertiefung besteht im eingerasteten Zustand ein Abstand.

Durch den Abstand im eingerasteten Zustand zwischen der Erhöhung und der Vertiefung werden mögliche Fertigungsfehler ausgeglichen.

Vorteilhafterweise kann die Erhöhung und die entsprechende Vertiefung in einer Schnittdarstellung durch eine Drehachse des Verschlussdeckels und des Gehäuses im eingerasteten Zustand eine erste Kante und eine zweite Kante aufweisen, wobei die erste Kante der Erhöhung und die erste Kante der entsprechenden Vertiefung relativ zur Drehachse des Gehäuses und des Verschlussdeckels schräg angeordnet ist und einen Winkel zwischen 15° und 60° aufweist, wobei zwischen der zweiten Kante der Erhöhung und der zweiten Kante der entsprechenden Vertiefung im eingerasteten Zustand des Handstückkopfs ein Abstand besteht.

Bei dieser Ausführungsform ist die erste Kante der Erhöhung und der entsprechenden Vertiefung schräg angeordnet, so dass beim Aufschrauben des Verschlussdeckels die erste Kante der Erhöhung an der ersten Kante der Vertiefung entlanggleitet, so dass eine elastische Verformung entsteht.

Durch den Winkel der ersten Kante kann also das erforderliche Drehmoment zum Aufschrauben des Verschlussdeckels festgelegt werden.

Vorteilhafterweise kann die Länge der ersten Kante länger als die Länge der zweiten Kante sein.

Durch die längere erste Kante kann der Winkel geringer gewählt werden, so dass das erforderliche Drehelement zum Aufschrauben des Verschlussdeckels geringer ist.

Vorteilhafterweise kann die Länge der zweiten Kante weniger als 30 % der Länge der ersten Kante betragen.

Vorteilhafterweise kann die Vertiefung als eine ringförmige ununterbrochene Nut an einer zylinderförmigen Außenfläche des Verschlussdeckels oder an einer zylinderförmigen Innenfläche des Gehäuses ausgebildet sein.

Durch eine Vertiefung als eine ringförmige Nut wird eine besonders stabile Einrastverbindung sichergestellt. Durch eine ringförmige Erhöhung ohne Unterbrechungen wird das erforderliche Drehmoment zur elastischen Verformung deutlich erhöht. Dies führt zu einer stabileren Einrastverbindung.

Vorteilhafterweise kann die Erhöhung als eine ununterbrochene ringförmige Erhöhung an einer zylinderförmigen Außenfläche des Verschlussdeckels oder an einer zylinderförmigen Innenfläche des Gehäuses ausgebildet sein.

Dies führt ebenfalls zu einer stabileren Einrastverbindung.

Vorteilhafterweise kann die mindestens eine Erhöhung als ein Ring von mehreren unterbrochenen Erhöhungen ausgeführt sein, die am Verschlussdeckel oder am Gehäuse angeordnet sind.

Vorteilhafterweise können das Gehäuses und/oder der Verschlussdeckel beim Einschrauben elastisch verformt werden und beim Einrasten in die ursprüngliche Form zurückkehren, wobei eine Differenz zwischen einem ersten Abstand einer Kante der Erhöhung zu einer entsprechenden Kante der Vertiefung in einem elastisch verformten Zustand und einem zweiten Abstand der Kante der Erhöhung zu der entsprechenden Kante der Vertiefung in einem entspannten ursprünglichen Zustand einen festgelegten Wert beträgt.

Die Differenz zwischen den Abständen im elastisch verformten Zustand und im entspannten Zustand ist ein Maß für die elastische Verformung. Je höher die Differenz, desto stärker die elastische Verformung und damit der notwendige Drehmoment zum Aufschrauben des Verschlussdeckels.

Vorteilhafterweise kann der Wert der Differenz zwischen 3 µm und 10 µm betragen.

Dieser Wert der Differenz ist besonders vorteilhaft, da das gewünschte Drehmoment erzielt wird.

Vorteilhafterweise können das Gehäuse und/oder der Verschlussdeckel Durchbrechungen aufweisen, um die elastische Verformung beim Einschrauben zu erleichtern.

Durch die Durchbrechungen wird die elastische Verformung erleichtert und dadurch das erforderliche Drehmoment zum Aufschrauben des Verschlussdeckels geringer.

Der Verschlussdeckel und das Gehäuse können aus einem geeigneten Material, wie aus rostfreiem Stahl oder aus einer Titanlegierung, gefertigt sein.

Die Einrastverbindung ist dabei so ausgeführt, dass durch die elastische Verformung beim Einschrauben ein bestimmtes Drehmoment überwunden werden muss, um das selbstständige unabsichtliche Aufschrauben des Verschlussdeckels durch Vibrationen zu verhindern. Das Drehmoment beim Einschrauben des Verschlussdeckels kann beispielsweise größer als 20 Ncm sein.

Vorteilhafterweise können die Durchbrechungen parallel zur Drehachse des Gehäuses und des Verschlussdeckels im eingerasteten Zustand angeordnet sein.

Vorteilhafterweise kann zwischen den benachbarten Durchbrechungen jeweils eine Erhöhung oder eine Vertiefung angeordnet sein.

Die Durchbrechungen können dabei entweder am Verschlussdeckel oder am Gehäuse angeordnet sein.

### Kurzbeschreibung der Zeichnungen

Die Erfindung wird anhand der Zeichnungen erläutert. Es zeigt, die
- Fig. 1: eine Skizze eines Handstückkopfes, die
- Fig. 2: eine Skizze einer rechteckigen Erhöhung, die
- Fig. 3: eine Skizze einer Erhöhung mit einer schrägen Kante, die
- Fig. 4: eine Skizze einer Erhöhung mit einer längeren schrägen Kante, die
- Fig. 5: eine Skizze einer alternativen Ausführungsform des Handstückkopfs.

### Ausführungsbeispiele

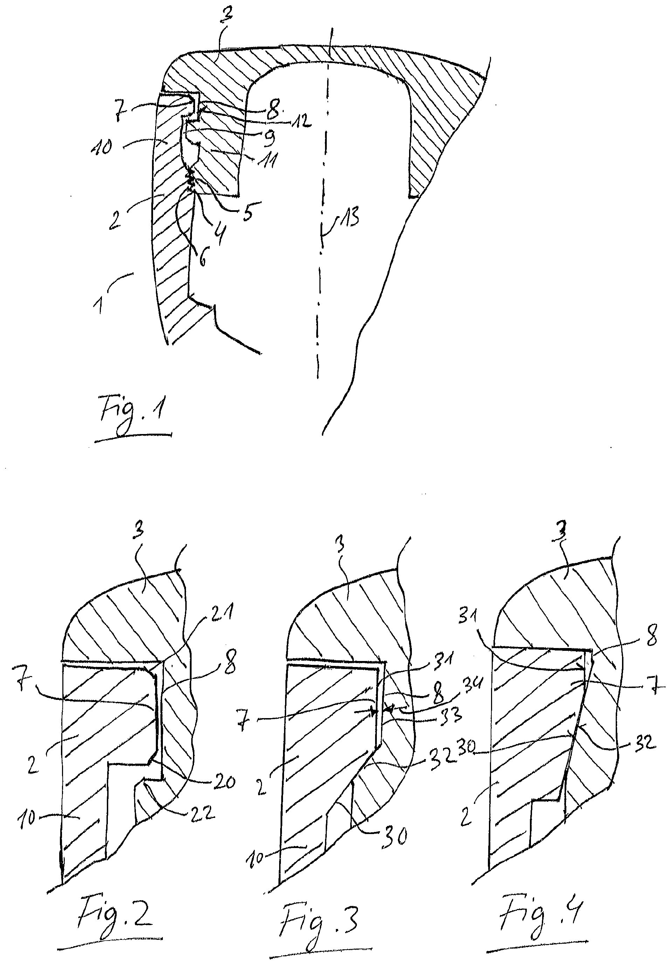

Die Fig. 1 zeigt ein Handstückkopf 1 umfassend ein Gehäuse 2 und Verschlussdeckel 3, wobei das Gehäuse mit dem Verschlussdeckel mittels einer Schraubverbindung 4 lösbar verbunden ist. Die Außenseite des Verschlussdeckels 3 weist ein Außengewinde 5 auf, dass mit einem Innengewinde 6 an Gehäuse 2 verschraubt ist. Das Gehäuse weißt eine Erhöhung 7 auf, die in eine entsprechende Vertiefung 8 am Verschlussdeckel 3 einrastet. Beim Einschrauben des Verschlussdeckels 3 in das Gehäuse 2 wird die Erhöhung 7 über einen Vorsprung 9 geschoben, so dass ein Bereich 10 des Gehäuses 2 und/oder ein Bereich 11 des Verschlussdeckels 3 elastisch verformt werden.

In Fig. 1 ist der Verschlussdeckel 3 und das Gehäuse 2 im eingerasteten Zustand nach dem Einschrauben dargestellt. Durch das Einrasten wird ein ungewolltes Lösen des Verschlussdeckels 3 vom Gehäuse 2 durch mögliche Vibrationen des Handstückkopfes verhindert. Die Erhöhung 7 und die entsprechende Vertiefung 8 sind im vorliegenden Fall rechteckig ausgeführt. Eine erste Kante 12 der Vertiefung 8 ist im vorliegenden Fall parallel zu einer Drehachse 13 des Verschlussdeckels 3 und des Gehäuses 2 im eingerasteten Zustand angeordnet.

Die Fig. 2 zeigt eine weitere Ausführungsform der Erhöhung 7 mit einer entsprechenden Vertiefung 8, wobei die Erhöhung 7 eine erste Fase 20 an einer unteren Ecke und eine zweite Fase 22 an einer oberen Ecke der Erhöhung 7 aufweist. Die Vertiefung 8 weißt entsprechend an einer unteren Ecke eine Fase 22 auf. Beim Einschrauben des Verschlussdeckels 3 in das Gehäuse 2 wird der Bereich 10 des Gehäuses elastisch verformt. Bis die Erhöhung 7 in die Vertiefung 8 einrastet und der Bereich 10 des Gehäuses 2 in den ursprünglichen Zustand zurückkehrt.

Die Fig. 3 zeigt eine weitere Ausführungsform, wobei die Erhöhung 7 eine erste Kante 30 und eine zweite Kante 31 aufweist. Die erste Kante 30 weist dabei einen Winkel von 35° relativ zu der Drehachse 13 aus Fig. 1 auf. Dadurch wird das Abschrauben des Verschlussdeckels 3 vom Gehäuse 2 erleichtert. Denn durch die schräge Anordnung der ersten Kante 30 wird die durch das Aufschrauben des Verschlussdeckels 3 entstehende Kraft in eine radial wirkende Kraft zur elastischen Verformung des Bereichs 10 des Gehäuses 2 umgewandelt. Die Vertiefung 8 weist dabei entsprechend eine erste Kante 32 und eine zweite Kante 33 auf, wobei die erste Kante 32 ebenfalls einen Winkel von 35° relativ zur Drehachse 13 aufweist. Im eingerasteten Zustand besteht zwischen der zweiten Kante 31 der Erhöhung 7 und der zweiten Kante 33 der Vertiefung 8 ein Abstand 34 in der Höhe von etwa 50µm.

Die Fig. 4 zeigt eine weitere Ausführungsform, wobei die erste Kante 30 der Erhöhung 7 ein Winkel von 15° relativ zur Drehachse 13 aufweist. Die erste Kante 30 ist dabei deutlich länger als die zweite Kante 31. Die Erste Kante 32 der entsprechenden Vertiefung 8 weist dabei ebenfalls ein Winkel von 15° relativ zur Drehachse 13 auf.

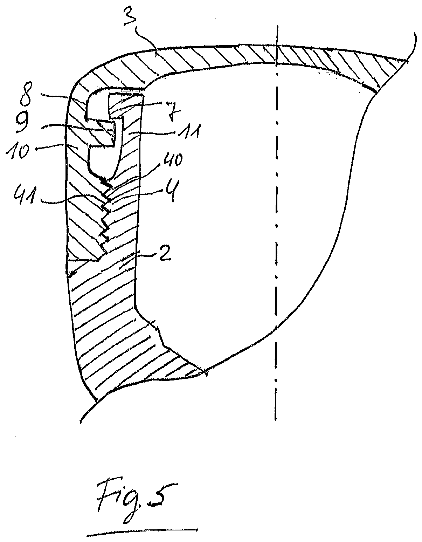

Die Fig. 5 zeigt eine weitere Ausführungsform, wobei der Verschlussdeckel 3 auf das Gehäuse 2 aufgeschraubt wird. Dabei weist eine Außenseite des Gehäuses 2 eine Erhöhung 7 auf, wobei eine Innenseite des Verschlussdeckels 3 eine entsprechende Vertiefung 8 aufweist. Die Schraubverbindung 4 besteht dabei aus einem Außengewinde 40 am Gehäuse 2 und einem Innengewinde 41 am Verschlussdeckel 3. Beim Aufschrauben des Verschlussdeckels 3 auf das Gehäuse 2 wird ein Bereich 10 des Verschlussdeckels und ein Bereich 11 des Gehäuses 2 elastisch verformt bis die Erhöhung 7 in die entsprechende Vertiefung 8 einrastet. Beim Einschrauben des Verschlussdeckels 3 in das Gehäuse 2 wird die Erhöhung 7 über einen Vorsprung 9 geschoben, bis die Erhöhung 7 in die Vertiefung 8 einrastet.

## Patentansprüche

1. Handstückkopf (1) für ein zahnärztliches Handstück umfassend ein Gehäuse (2) und einen Verschlussdeckel (3), wobei das Gehäuse (2) mit dem Verschlussdeckel (3) mittels einer Schraubverbindung (4) lösbar verbunden ist, wobei der Handstückkopf eine Einrastverbindung aufweist, wobei beim Einschrauben des Verschlussdeckels (3) die Einrastverbindung einrastet, **dadurch gekennzeichnet, dass** das Gehäuse (2) und/oder der Verschlussdeckel (3) beim Einschrauben elastisch verformt werden und beim Einrasten in die ursprüngliche Form vor der elastischen Verformung zurückkehren, wobei der Verschlussdeckel (3) mindestens eine Vertiefung (8) aufweist, wobei das Gehäuse (2) entsprechend mindestens eine Erhöhung (7) aufweist, wobei beim Einschrauben des Verschlussdeckels (3) die Erhöhung (7) am Gehäuse (2) in die entsprechende Vertiefung (8) am Verschlussdeckel (3) einrastet, wobei die Einrastverbindung durch die Erhöhung (7) und die Vertiefung (8) gebildet wird, wobei falls der Verschlussdeckel (3) in das Gehäuse (2) eingeschraubt wird, eine Außenfläche des Verschlussdeckels (3) mindestens eine Vertiefung (8) aufweist, wobei eine Innenfläche des Gehäuses (2) mindestens eine Erhöhung (7) aufweist, wobei beim Einschrauben des Verschlussdeckels (3) die Erhöhung (7) am Gehäuse (2) in die entsprechende Vertiefung (8) am Verschlussdeckel (3) einrastet oder falls der Verschlussdeckel (3) auf das Gehäuse (2) aufgeschraubt wird, eine Innenfläche des Verschlussdeckels (3) mindestens eine Erhöhung (7) aufweist, wobei eine Außenfläche des Gehäuses (2) entsprechend mindestens eine Vertiefung (8) aufweist, wobei beim Einschrauben des Verschlussdeckels (3) die Erhöhung (7) am Verschlussdeckel (3) in die entsprechende Vertiefung (8) am Gehäuse (2) einrastet, wobei zwischen der Erhöhung (7) und der Vertiefung (8) im eingerasteten Zustand ein Abstand (34) besteht.

2. Handstückkopf (1) nach Anspruch 1, **dadurch gekennzeichnet, dass** die Erhöhung (7) und die entsprechende Vertiefung (8) in einer Schnittdarstellung durch eine Drehachse (13) des Verschlussdeckels (3) und des Gehäuses (2) rechteckig geformt ist.

3. Handstückkopf (1) nach Anspruch 1 oder 2, **dadurch gekennzeichnet, dass** die Erhöhung (7) an einer oberen Ecke eine erste Fase (21) und/oder an einer unteren Ecke eine zweite Fase (20) aufweist.

4. Handstückkopf (1) nach einem der Ansprüche 1-3, **dadurch gekennzeichnet, dass** die Vertiefung (8) an einer unteren Ecke eine Fase (22) aufweist.

5. Handstückkopf (1) nach einem der Ansprüche 1-4, **dadurch gekennzeichnet, dass** die Erhöhung (7) und die entsprechende Vertiefung (8) in einer Schnittdarstellung durch eine Drehachse (13) des Verschlussdeckels (3) und des Gehäuses (2) im eingerasteten Zustand eine erste Kante und eine zweite Kante aufweist, wobei die erste Kante (30) der Erhöhung (7) und die erste Kante (32) der entsprechenden Vertiefung (8) relativ zur Drehachse des Gehäuses (2) und des Verschlussdeckels (3) schräg angeordnet ist und einen Winkel zwischen 15° und 60° aufweist, wobei zwischen der zweiten Kante (31) der Erhöhung (7) und der zweiten Kante (33) der entsprechenden Vertiefung (8) im eingerasteten Zustand des Handstückkopfs (1) ein Abstand (34) besteht.

6. Handstückkopf (1) nach Anspruch 5, **dadurch gekennzeichnet, dass** die Länge der ersten Kante (30) länger als die Länge der zweiten Kante (31) ist.

7. Handstückkopf (1) nach Anspruch 5, **dadurch gekennzeichnet, dass** die Länge der zweiten Kante (31) weniger als 30 % der Länge der ersten Kante (30) beträgt.

8. Handstückkopf (1) nach einem der Ansprüche 1-7, **dadurch gekennzeichnet, dass** die Vertiefung (8) als eine ringförmige ununterbrochene Nut an einer zylinderförmigen Außenfläche des Verschlussdeckels (3) oder an einer zylinderförmigen Innenfläche des Gehäuses (2) ausgebildet ist.

9. Handstückkopf (1) nach einem der Ansprüche 1-8, **dadurch gekennzeichnet, dass** die Erhöhung (7) als eine ununterbrochene ringförmige Erhöhung (7) an einer zylinderförmigen Außenfläche des Verschlussdeckels (3) oder an einer zylinderförmigen Innenfläche des Gehäuses (2) ausgebildet ist.

10. Handstückkopf (1) nach einem der Ansprüche 1-8, **dadurch gekennzeichnet, dass** die mindestens eine Erhöhung (7) als ein Ring von mehreren unterbrochenen Erhöhungen ausgeführt ist, die am Verschlussdeckel (3) oder am Gehäuse (2) angeordnet sind.

11. Handstückkopf (1) nach einem der Ansprüche 1-10, **dadurch gekennzeichnet, dass** das Gehäuse (2) und/oder der Verschlussdeckel (3) Durchbrechungen aufweisen, um die elastische Verformung beim Einschrauben zu erleichtern.

12. Handstückkopf (1) nach Anspruch 11, **dadurch gekennzeichnet, dass** die Durchbrechungen parallel zur Drehachse des Gehäuses (2) und des Verschlussdeckels (3) im eingerasteten Zustand angeordnet sind.

13. Handstückkopf (1) nach Anspruch 11 oder 12, **dadurch gekennzeichnet, dass** zwischen den benachbarten Durchbrechungen jeweils eine Erhöhung (7) oder eine Vertiefung (8) angeordnet ist.

## Claims

1. Handpiece head (1) for a dental handpiece, comprising a housing (2) and a cover plate (3), wherein the housing (2) is detachably connected to the cover plate (3) by means of a screw connection (4), wherein the handpiece head comprises a snap-in connection, wherein the snap-in connection snaps in when the cover plate (3) is screwed in, **characterized in that** the housing (2) and/or the cover plate (3) are elastically deformed during the screwing-in process and return to their original shape prior to the elastic deformation upon snapping in, wherein the cover plate (3) comprises at least one depression (8), wherein the housing (2) correspondingly comprises at least one elevation (7), wherein the elevation (7) on the housing (2) snaps into the corresponding depression (8) on the cover plate (3) when the cover plate (3) is screwed in, wherein the snap-in connection is formed by the elevation (7) and the depression (8), wherein if the cover plate (3) is screwed into the housing (2), an outer surface of the cover plate (3) comprises at least one depression (8), wherein an inner surface of the housing (2) comprises at least one elevation (7), wherein the elevation (7) on the housing (2) snaps into the corresponding depression (8) on the cover plate (3) when the cover plate (3) is screwed in, or if the cover plate (3) is screwed onto the housing (2), an inner surface of the cover plate (3) comprises at least one elevation (7), wherein an outer surface of the housing (2) correspondingly comprises at least one depression (8), wherein the elevation (7) on the cover plate (3) snaps into the corresponding depression (8) on the housing (2) when the cover plate (3) is screwed in, wherein a distance (34) exists between the elevation (7) and the depression (8) in the snapped-in state.

2. Handpiece head (1) according to claim 1, **characterized in that** the elevation (7) and the corresponding depression (8) are rectangularly shaped in a sectional view through an axis of rotation (13) of the cover plate (3) and of the housing (2) .

3. Handpiece head (1) according to claim 1 or 2, **characterized in that** the elevation (7) comprises a first chamfer (21) at an upper corner and/or a second chamfer (20) at a lower corner.

4. Handpiece head (1) according to claims 1 to 3, **characterized in that** the depression (8) comprises a chamfer (22) at a lower corner.

5. Handpiece head (1) according to any of claims 1 to 4, **characterized in that** the elevation (7) and the corresponding depression (8) comprise a first edge and a second edge in the snapped-in state in a sectional view through an axis of rotation (13) of the cover plate (3) and of the housing (2), wherein the first edge (30) of the elevation (7) and the first edge (32) of the corresponding depression (8) are arranged obliquely in relation to the axis of rotation of the housing (2) and of the cover plate (3) and have an angle between 15° and 60°, wherein a distance (34) exists between the second edge (31) of the elevation (7) and the second edge (33) of the corresponding depression (8) in the snapped-in state of the handpiece head (1).

6. Handpiece head (1) according to claim 5, **characterized in that** the length of the first edge (30) is longer than the length of the second edge (31).

7. Handpiece head (1) according to claim 5, **characterized in that** the length of the second edge (31) is less than 30% of the length of the first edge (30).

8. Handpiece head (1) according to any of claims 1 to 7, **characterized in that** the depression (8) is designed as an annular continuous groove on a cylindrical outer surface of the cover plate (3) or on a cylindrical inner surface of the housing (2).

9. Handpiece head (1) according to any of claims 1 to 8, **characterized in that** the elevation (7) is designed as a continuous annular elevation (7) on a cylindrical outer surface of the cover plate (3) or on a cylindrical inner surface of the housing (2).

10. Handpiece head (1) according to any of claims 1 to 8, **characterized in that** the at least one elevation (7) is designed as a ring of several continuous elevations arranged on the cover plate (3) or on the housing (2).

11. Handpiece head (1) according to any of claims 1 to 10, **characterized in that** the housing (2) and/or the cover plate (3) comprise through-holes in order to facilitate the elastic deformation during the screwing-in process.

12. Handpiece head (1) according to claim 11, **characterized in that** the through-holes are arranged parallelly to the axis of rotation of the housing (2) and of the cover plate (3) in the snapped-in state.

13. Handpiece head (1) according to claim 11 or 12, **characterized in that** an elevation (7) or a depression (8) is respectively arranged between adjacent through-holes.

## Revendications

1. Tête de pièce à main (1) pour un outil de dentiste comprenant un boîtier (2) et un couvercle de fermeture (3), le boîtier (2) étant relié de manière amovible avec le couvercle de fermeture (3) au moyen d'un raccord à vis (4), la tête de pièce à main présentant un système de connexion par encliquetage, où, lors du vissage du couvercle de fermeture (3), le système de connexion par encliquetage se verrouille, **caractérisée en ce que** le boîtier (2) et/ou le couvercle de fermeture (3) sont déformés de manière élastique lors du vissage et retournent à la forme d'origine à partir de la déformation élastique lors du verrouillage, le couvercle de fermeture (3) présentant au moins une cavité (8), le boîtier (2) présentant au moins une protubérance (7) correspondante, où, lors du vissage du couvercle de fermeture (3), la protubérance (7) sur le boîtier (2) se verrouille dans la cavité (8) correspondante sur le couvercle de fermeture (3), où le système de connexion par encliquetage est formé par la protubérance (7) et la cavité (8), où, dans le cas où le couvercle de fermeture (3) est vissé dans le boîtier (2), une surface extérieure du couvercle de fermeture (3) présente au moins une cavité (8), où une surface intérieure du boîtier (2) présente au moins une protubérance (7), où, lors du vissage du couvercle de fermeture (3), la protubérance (7) sur le boîtier (2) se met en prise dans la cavité (8) correspondante sur le couvercle de fermeture (3), ou dans le cas où le couvercle de fermeture (3) est vissé sur le boîtier (2), une surface intérieure du couvercle de fermeture (3) présente au moins une protubérance (7), où une surface extérieure du boîtier (2) présente de manière correspondante au moins une cavité (8), où lors du vissage du couvercle de boîtier (3), la protubérance (7) sur le couvercle de fermeture (3) se met en prise dans la cavité (8) correspondante sur le boîtier (2), où il reste un espace (34) entre la protubérance (7) et la cavité (8) à l'état verrouillé.

2. Tête de pièce à main (1) selon la revendication 1, **caractérisée en ce que** la protubérance (7) et la cavité (8) correspondante ont une forme rectangulaire dans une représentation en coupe par un axe de rotation (13) du couvercle de fermeture (3) et du boîtier (2).

3. Tête de pièce à main (1) selon la revendication 1 ou la revendication 2, **caractérisée en ce que** la protubérance (7) présente un premier chanfrein (21) sur le coin supérieur et/ou un deuxième chanfrein (20) sur le coin inférieur.

4. Tête de pièce à main (1) selon l'une des revendications 1 à 3, **caractérisée en ce que** la cavité (8) présente un chanfrein (22) au niveau d'un coin inférieur.

5. Tête de pièce à main (1) selon l'une des revendications 1 à 4, **caractérisée en ce que** la protubérance (7) et la cavité (8) correspondante présente, dans une représentation en coupe par un axe de rotation (13) du couvercle de fermeture (3) et du boîtier (2), une première arête et une deuxième arête à l'état verrouillé, où la première arête (30) de la protubérance (7) et la première arête (32) de la cavité (8) correspondante sont disposées inclinées par rapport à l'axe de rotation du boîtier (2) et du couvercle de fermeture (3) et présentent un angle entre 15 ° et 60 °, où, entre la deuxième arête (31) de la protubérance (7) et la deuxième arête (33) de la cavité (8) correspondante il reste un espace (34) dans l'état verrouillé de la tête de pièce à main (1).

6. Tête de pièce à main (1) selon la revendication 5, **caractérisée en ce que** la longueur de la première arête (30) est supérieure à la longueur de la deuxième arête (31) .

7. Tête de pièce à main (1) selon la revendication 5, **caractérisée en ce que** la longueur de la deuxième arête (31) est de 30 % inférieure à la longueur de la première arête (30).

8. Tête de pièce à main (1) selon l'une des revendications 1 à 7, **caractérisée en ce que** la cavité (8) est conçue sous la forme d'une rainure en forme d'anneau ininterrompu sur une surface extérieure de forme cylindrique du couvercle de fermeture (3) ou sur une surface intérieure de forme cylindrique du boîtier (2).

9. Tête de pièce à main (1) selon l'une des revendications 1 à 8, **caractérisée en ce que** la protubérance (7) est conçue sous la forme d'une protubérance (7) en forme d'anneau ininterrompu sur une surface extérieure de forme cylindrique du couvercle de fermeture (3) ou sur une surface intérieure de forme cylindrique du boîtier (2) .

10. Tête de pièce à main (1) selon l'une des revendications 1 à 8, **caractérisée en ce que** l'au moins une protubérance (7) est conçue comme un anneau formé de plusieurs protubérances interrompues qui sont disposées sur le couvercle de fermeture (3) ou sur le boîtier (2).

11. Tête de pièce à main (1) selon l'une des revendications 1 à 10, **caractérisée en ce que** le boîtier (2) et/ou le couvercle de fermeture (3) présentent des interruptions afin de faciliter la déformation élastique lors du vissage.

12. Tête de pièce à main (1) selon la revendication 11, **caractérisée en ce que** les interruptions sont disposées parallèlement par rapport à l'axe de rotation du boîtier (2) et du couvercle de fermeture (3) dans l'état verrouillé.

13. Tête de pièce à main (1) selon la revendication 11 ou la revendication 12, **caractérisée en ce que** chaque fois une protubérance (7), ou une cavité (8) est disposée entre les interruptions voisines.
